# EUROPEAN PATENT SPECIFICATION

(11) **EP 3 419 108 B1**
(45) Date of publication and mention of the grant of the patent: **18.11.2020**
(21) Application number: 18178799.5
(22) Date of filing: 20.06.2018
(51) Int. Cl.: H01Q 1/24, H01Q 1/52, H01Q 13/10, H01Q 21/28

(54) **WIRELESS COMMUNICATION MODULE**
DRAHTLOSKOMMUNIKATIONSMODUL
MODULE DE COMMUNICATION SANS FIL

(30) Priority: 23.06.2017 TW 106120993
(43) Date of publication of application: 26.12.2018
(73) Proprietor: Arcadyan Technology Corporation, Hsinchu City 30071 (TW)
(72) Inventor: KUO, Shin-Lung, 820 Kaohsiung City (TW); CHENG, Shih-Chieh, 710 Tainan City (TW)
(74) Representative: dompatent von Kreisler Selting Werner - Partnerschaft von Patent- und Rechtsanwälten mbB

(56) References cited:
- US-A1- 2010 079 217
- US-A1- 2012 274 522
- KI-JIN KIM ET AL: "The high isolation dual-band inverted F antenna diversity system with the small N-section resonators on the ground plane", MICROWAVE CONFERENCE, 2006. APMC 2006. ASIA-PACIFIC, IEEE, PI, 1 December 2006 (2006-12-01), pages 195-198, XP031201467, DOI: 10.1109/APMC.2006.4429407 ISBN: 978-4-902339-08-6

## Description

### BACKGROUND OF THE INVENTION

### Field of the Invention

The invention relates in general to a wireless communication module, and more particularly to a wireless communication module having a resonator.

### Description of the Related Art

Conventional wireless communication module has multiple antennas disposed very close to each other in order to meet the requirements of slimness, thinness, and lightweight. Under such design, interference between antennas becomes inevitable. Therefore, it has become a prominent task for the industries to provide a wireless communication module capable of resolving signal interference between the antennas.

KI-JIN KIM ET AL: "The high isolation dual-band inverted F antenna diversity system with the small N-section resonators on the ground plane", MICROWAVE CONFERENCE, 2006, APMC 2006. ASIA-PACIFIC, IEEE, PI, 1 December 2006 (2006-12-01), pages 195-198 discloses a high isolated dual-band inverted-F diversity system for portable devices, operating in 2.4 GHz band and 5.2 GHz band. Therein, to reduce mutual coupling and get high isolation between two internal dual-band antennas, small N-section resonators in the form of slots are implemented in the ground plane.

### SUMMARY OF THE INVENTION

The invention is directed to a wireless communication module capable of resolving the above problems.

According to one embodiment of the present invention, a wireless communication module is provided. The wireless communication module includes a substrate, a first antenna, a second antenna and a resonator group. The substrate has a lateral surface. The first antenna and the second antenna are adjacent to the lateral surface of the substrate. A connection direction between the first antenna and the second antenna is parallel to the lateral surface. The resonator group is disposed between the first antenna and the second antenna and separated from the first antenna and the second antenna along a direction parallel to the lateral surface. The resonator group includes a first resonator and a second resonator. The first resonator is adjacent to the lateral surface of the substrate and includes a first resonant cavity, a first extension slot, a first conductive portion and a second conductive portion. The first extension slot extends towards the lateral surface of the substrate from the first resonant cavity and forms an opening on the lateral surface. The first conductive portion and the second conductive portion are located within the first resonant cavity and separated from each other. The second resonator is separated from the first resonator along a direction perpendicular to the lateral surface and includes a second resonant cavity and a second extension slot. The second extension slot extends towards the lateral surface of the substrate from the second resonant cavity and is separated from the first resonant cavity of the first resonator. The first resonator is disposed between the lateral surface of the substrate and the second resonator.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

FIG. 1 is a top view of a wireless communication module according to an embodiment of the present invention.
FIG. 2 is a top view of a wireless communication module according to another embodiment of the present invention.
FIGS. 3A and 3B are return loss characteristic diagram of a conventional wireless communication module and the wireless communication module of FIG. 1.
FIG. 4 is an isolation diagram of a conventional wireless communication module and the wireless communication module of FIG. 1.

### DETAILED DESCRIPTION OF THE INVENTION

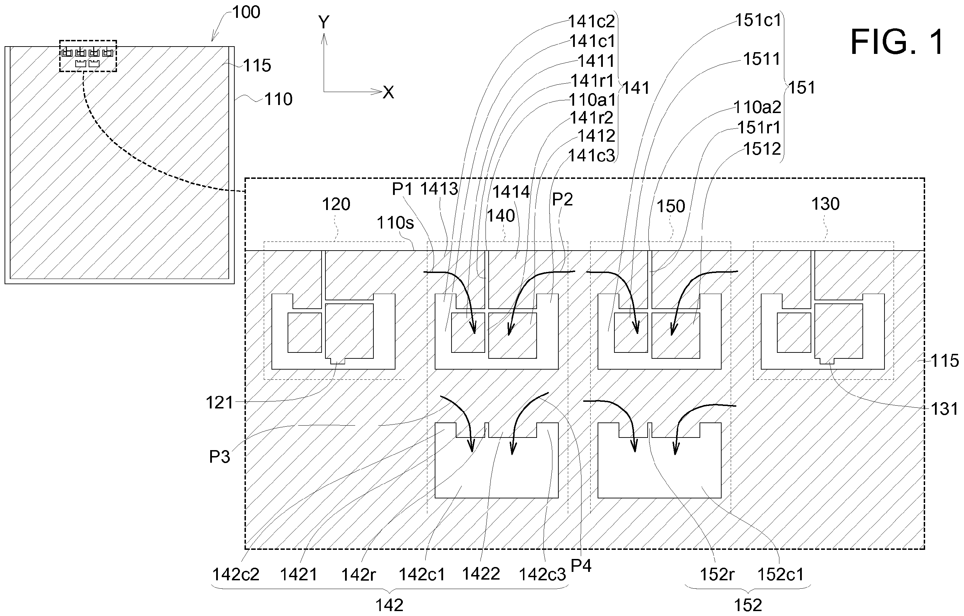

Referring to FIG. 1, a top view of a wireless communication module 100 according to an embodiment of the present invention is shown. The wireless communication module 100, such as a circuit board, can be disposed on an electronic device for receiving/transmitting wireless signals, and can be realized by such as a mobile phone, a smart watch, a PC tablet, a wireless transceiver, or other suitable products. The wireless communication module 100 includes a substrate 110, a first antenna 120, a second antenna 130 and at least one resonator group. The at least one resonator group includes a first resonator group 140 and a second resonator group 150. The substrate 110 has a ground layer 115 formed thereon, wherein the ground layer 115, the first antenna 120, the second antenna 130, the first resonator group 140 and the second resonator group 150 can be located on the same layer. In terms of the manufacturing process, the ground layer 115, the first antenna 120, the second antenna 130, the first resonator group 140 and the second resonator group 150 can be formed in the same manufacturing process. The first antenna 120, the second antenna 130, the first resonator group 140 and the second resonator group 150 can be disposed on the same side of the substrate 110. Besides, the first antenna 120 and the second antenna 130 can be realized by any types of antennas, such as monopole antennas, helical antennas, micro-strip antennas, inverted F-type antennas, or split-ring resonators, and are not subjected to particular restrictions in the present invention.

As indicated in FIG. 1, the first antenna 120 and the second antenna 130 respectively include feeding points 121 and 131. The current can be fed to the first antenna 120 and the second antenna 130 respectively through the feeding points 121 and 131 (current paths P1 and P2 illustrated in bold lines) to be distributed on the ground layer 115. The impedances of the first antenna 120 and the second antenna 130 match the impedance of the driving source of the current, and therefore a wireless signal is generated. The first resonator group 140 and the second resonator group 150 are located between the first antenna 120 and the second antenna 130 and separated from the first antenna 120 and the second antenna 130 along a direction parallel to a lateral surface 110s. The second resonator group 150 is located between the first resonator group 140 and the second antenna 130. The resonator group (such as the first resonator group 140 and the second resonator group 150) is electrically isolated from the first antenna 120 and the second antenna 130 to isolate the wireless signal between the first antenna 120 and the second antenna 130, such that the interference of wireless signals between two antennas can be avoided or reduced. In an embodiment, the first resonator group 140 and/or the second resonator group 150 has the function of split-ring resonator (SRR).

In the present embodiment, the quantity of resonator groups is exemplified by two (that is, the first resonator group 140 and the second resonator group 150). However, the quantity of resonator groups can also be exemplified by one or more than two. When the quantity of resonator groups is exemplified by more than two, multiple resonator groups can be arranged as an nxm matrix, wherein n and m are positive integers equivalent to or larger than 1, and can have the same or different values. As indicated in FIG. 1, multiple resonator groups can be arranged in a direction parallel to the connection direction between the first antenna 120 and the second antenna 130 such as along the X-axis. Or, multiple resonator groups can be arranged in a direction perpendicular to the connection direction between the first antenna 120 and the second antenna 130 such as along the Y-axis.

The impedances of the first resonator group 140 and the second resonator group 150 match the impedance of the driving source of the current. Thus, after the first resonator group 140 and the second resonator group 150 attract the current of the ground layer 115, the current can be excited by the resonator group 140 to generate a wireless signal to enhance the signal strength of the wireless communication module 100. The first resonator group 140 and the second resonator group 150 can be separated from any electronic elements of the wireless communication module 100 or can be disposed independently to avoid or reduce the current distributed on the ground layer 115 being attracted by the electronic elements, such that the signal strength of the first resonator group 140 and the second resonator group 150 can be further enhanced. The said electronic elements can be realized by any types of active elements (such as active chips) and/or passive elements (such as resistors, inductors and/or capacitors).

Each resonator group includes at least two resonators separated from each other. Let the first resonator group 140 of FIG. 1 be taken for example. The first resonator group 140 includes a first resonator 141 and a second resonator 142 separated from each other along a direction perpendicular to the lateral surface 110s. The structure of the first resonator 141 and/or the second resonator 142 can be identical or similar to that of the first antenna 120 or the second antenna 130 or different from that of the first antenna 120 or the second antenna 130. The geometric structures of the resonators are not subjected to particular restrictions in the embodiments of the present invention, and any structures would do as long as the said structures allow the structures allow the first resonator 141 and/or the second resonator 142 to be separated from each other.

As indicated in FIG. 1, the first resonator 141 is adjacent to the lateral surface 110s and includes a first resonant cavity 141c1, a first extension slot 141r1, a first conductive portion 1411 and a second conductive portion 1412. The first extension slot 141r1 extends towards the lateral surface 110s of the substrate 110 from the first resonant cavity 141c1 and forms (or exposes) a first opening 110a1 on the lateral surface 110s. The first conductive portion 1411 and the second conductive portion 1412 are located within the first resonant cavity 141c1 and separated from each other. The sizes and geometric structures of the first conductive portion 1411 and the second conductive portion 1412 can match the operating band of the wireless communication module 100, such that the current distributed on the ground layer 115 is excited by the first resonator 141 to generate a wireless signal whose frequency is within the operating band.

The first resonator 141 can attract the wireless signals of the first antenna 120 and the second antenna 130 to avoid the wireless signals interfering with each other. Detailed descriptions are disclosed below.

As indicated in FIG. 1, the first resonator 141 is closer to the lateral surface 110s of the substrate 110 than the second resonator 142. Since the first extension slot 141r1 of the first resonator 141 extends to the lateral surface 110s and exposes the first opening 110a1, the first extension slot 141r1 can divide the ground layer 115 disposed on the left side and the right side of the first extension slot 141r1 into conducting layers 1413 and 1414 respectively providing two independent or separated current paths P1 and P2. Thus, the current distributed on the ground layer 115 can respectively be guided to the first resonant cavity 141c1 through the paths formed by the conducting layers 1413 and 1414. Then, the current is excited to generate a wireless signal, such that the signal strength of the wireless communication module 100 can be enhanced.

As indicated in FIG. 1, a groove 141r2, formed between the first conductive portion 1411 and the second conductive portion 1412, completely separates the first conductive portion 1411 from the second conductive portion 1412. Similarly, the first conductive portion 1411 and the second conductive portion 1412 can respectively provide two independent or separated current paths P1 and P2. Thus, the current distributed on the ground layer 115 can respectively be guided to the first resonant cavity 141c1 through the paths formed by the first conductive portion 1411 and the second conductive portion 1412. Then, the current is excited to generate a wireless signal, such that the signal strength of the wireless communication module 100 can be enhanced. In the present embodiment, the groove 141r2 of the first extension slot 141r1 can be substantially collinear with each other, non-collinear but parallel with each other, or neither collinear nor parallel with each other.

As indicated in FIG. 1, the first resonant cavity 141c1 is a quadrilateral, such as a rectangle. The first resonator 141 further includes a first extension cavity 141c2 and a second extension cavity 141c3 respectively located on two opposite sides of the first extension slot 141r1 and separated from the first extension slot 141r1. The first extension cavity 141c2 and the second extension cavity 141c3 both extend towards the lateral surface 110s from the same side of the first resonant cavity 141c1. The first extension cavity 141c2 and the second extension cavity 141c3 can define the current paths P1 and P2 with more obvious boundaries, such that the current distributed on the ground layer 115 can be more easily attracted to the first resonant cavity 141c1.

As indicated in FIG. 1, the second resonator 142 includes a second resonant cavity 142c1 and a second extension slot 142r. The second extension slot 142r extends towards the lateral surface 110s from the second resonant cavity 142c1 but is separated from the first resonant cavity 141c1 before extending to the first resonant cavity 141c1 of the first resonator 141. The second extension slot 142r divides the ground layer 115 into conducting layers 1421 and 1422 to respectively provide two independent or separated current paths P3 and P4. Thus, the current distributed on the ground layer 115 can respectively be guided to the second resonant cavity 142c1 by the conducting layers 1421 and 1422. Then, the current is excited to generate a wireless signal, such that the signal strength of the wireless communication module 100 can be enhanced.

The second resonator 142 increases the distribution area of the first resonator group 140 and therefore attracts more current distributed on the ground layer 115. In another embodiment, the first resonator group 140 includes more second resonators 142 or more structures similar to the second resonator 142. The resonators of the first resonator group 140 can be arranged as a straight line, an n×m matrix or any arrangement. The arrangement and/or quantity of the resonators of the first resonator group 140 are not subjected to particular restriction in the embodiments of the present invention, and any arrangement and/or quantity would do as long as the said arrange and/or quantity allow the resonators to attract the current distributed on the ground layer 115.

The second resonant cavity 142c1 is a quadrilateral, such as a rectangle. The second resonator 142 further includes a third extension cavity 142c2 and a fourth extension cavity 142c3 respectively located on two opposite sides of the second extension slot 142r and separated from the second extension slot 142r. The third extension cavity 142c2 and the fourth extension cavity 142c3 both extend towards the lateral surface 110s from the same side of the second resonant cavity 142c1, but do not extend to the first resonator 141. The third extension cavity 142c2 and the fourth extension cavity 142c3 can define the current paths current paths P3 and P4 with more obvious boundaries, such that the current distributed on the ground layer 115 can be more easily attracted to the second resonant cavity 142c1.

As indicated in FIG. 1, the second resonator group 150 includes a third resonator 151 and a fourth resonator 152 separated from each other along a direction perpendicular to the lateral surface 110s. The structure of the third resonator 151 and/or the fourth resonator 152 can be identical or similar to that of the first antenna 120 or the second antenna 130 or different from that of the first antenna 120 or the second antenna 130. The geometric structures of the resonators are not subjected to particular restrictions in the embodiments of the present invention, and any structures would do as long as the said structures allow the third resonator 151 and/or the fourth resonator 152 to be separated from each other.

The third resonator 151 is adjacent to the lateral surface 110s and includes a third resonant cavity 151c1, a third extension slot 151r1, a third conductive portion 1511 and a fourth conductive portion 1512. The third extension slot 151r1 extends towards the lateral surface 110s from the third resonant cavity 151c1 and forms a second opening 110a2 on the lateral surface 110s. The third conductive portion 1511 and the fourth conductive portion 1512 are located within the third resonant cavity 151c1 and separated from each other.

The fourth resonator 152 is separated from the third resonator 151 along a direction perpendicular to the lateral surface 110s. The fourth resonator 152 includes a fourth resonant cavity 152c1 and a fourth extension slot 152r. The fourth extension slot 152r extends towards the lateral surface 110s from the fourth resonant cavity 152c1 and is separated from the third resonant cavity 151c1 of the third resonator 151. The third resonator 151 is disposed between the lateral surface 110s and the fourth resonator 152.

Other structures of the third resonator 151 are similar to corresponding structures of the first resonator 141, and/or other structures of the fourth resonator 152 are similar to corresponding structures of the second resonator 142, and the similarities are not repeated here. In an embodiment, the third resonator 151 and the first resonator 141 have the same shape, and so do the fourth resonator 152 and the second resonator 142 have the same shape, but the embodiments of the present invention are not limited thereto.

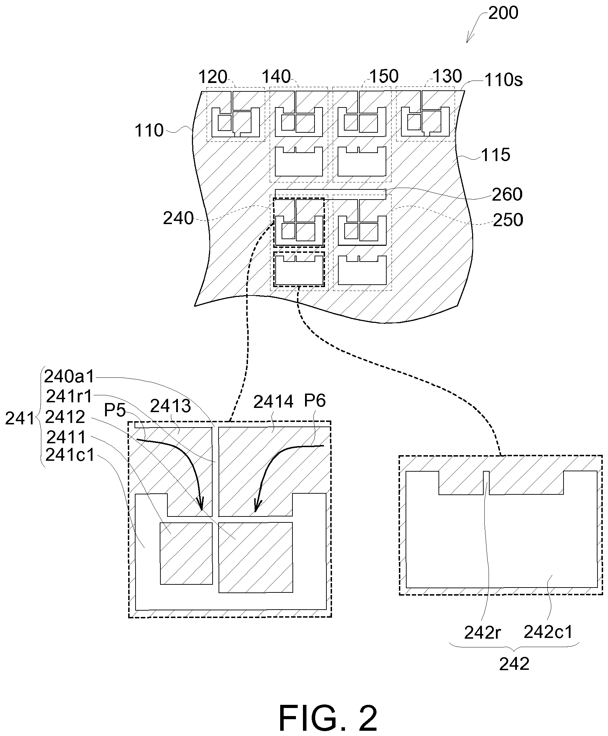

Referring to FIG. 2, a top view of a wireless communication module 200 according to an embodiment of the present invention is shown. The wireless communication module 200, such as a circuit board, can be disposed on an electronic device for receiving/transmitting wireless signals. The wireless communication module 200 includes a substrate 110, a first antenna 120, a second antenna 130 and at least one resonator group. The at least one resonator group includes such as the first resonator group 140 and the second resonator groups 150, 240 and 250.

Unlike the above embodiments, the first resonator group 140 and the second resonator groups 150, 240 and 250 together are arranged as a 2x2 matrix in the present embodiment. The first resonator group 140 is separated from the second resonator group 240 along a direction perpendicular to the lateral surface 110s. The second resonator group 150 is also separated from the second resonator group 250 along a direction perpendicular to the lateral surface 110s. The second resonator groups 240 and 250 are arranged along a direction parallel to the lateral surface 110s.

Let the second resonator group 240 be taken for example. The second resonator group 240 includes a third resonator 241 and a fourth resonator 242 separated from each other along a direction perpendicular to the lateral surface 110s. The structure of the third resonator 241 and/or the fourth resonator 242 can be identical or similar or to that of the first antenna 120 or the second antenna 130 or different from that of the first antenna 120 or the second antenna 130. The geometric structures of the resonators are not subjected to particular restrictions in the embodiments of the present invention, and any structures would do as long as the said structures allow the third resonator 241 and/or the fourth resonator 242 to be separated from each other.

The third resonator 241 is adjacent to the first resonator group 140 and includes a third resonant cavity 241c1, a third extension slot 241r1, a third conductive portion 2411 and a fourth conductive portion 2412. The third extension slot 241r1 extends towards the first resonator group 140 from the third resonant cavity 241c1 and forms a third opening 240a1 on the expansion slot 260. The third conductive portion 2411 and the fourth conductive portion 2412 are located within the third resonant cavity 241c1 and separated from each other. The expansion slot 260 are located between two resonator groups, such as between the first resonator group 140 and the second resonator group 240, and are located between the second resonator group 150 and the second resonator group 250.

The expansion slot 260 can extend along a direction parallel to the lateral surface 110s to be connected to the second resonator groups 240 and 250 disposed underneath the expansion slot 260 but is not adjacent to the lateral surface 110s. The third extension slot 241r1 of the second resonator group 240 extends to the expansion slot 260 to divide the ground layer 115, disposed between the expansion slot 260 and the third resonant cavity 241c1, into two separated conducting layers 2413 and 2414. The conducting layers 2413 and 2414 respectively provide current paths P5 and P6 through which the current is guided to the third resonant cavity 241c1.

The fourth resonator 242 is separated from the third resonator 241 along a direction perpendicular to the lateral surface 110s and includes a fourth resonant cavity 242c1 and a fourth extension slot 242r. The fourth extension slot 242r extends towards the third resonator 241 from the fourth resonant cavity 242c1 and is separated from the third resonant cavity 241c1 of the third resonator 241. The third resonator 241 is disposed between the expansion slot 260 and the fourth resonator 242.

Other structures of the third resonator 241 are similar to corresponding structures of the first resonator 141, and/or other structures of the fourth resonator 242 are similar to corresponding structures of the second resonator 142, and the similarities are not repeated here. In an embodiment, the third resonator 241 and the first resonator 141 have the same shape, and so do the fourth resonator 242 and the second resonator 142 have the same shape, but the embodiments of the present invention are not limited thereto. Besides, the structure of the second resonator group 250 is similar to that of the second resonator group 240, and the relationship between the second resonator group 250 and the expansion slot 260 is similar to that between the second resonator group 240 and the expansion slot 260, and the similarities are not repeated here.

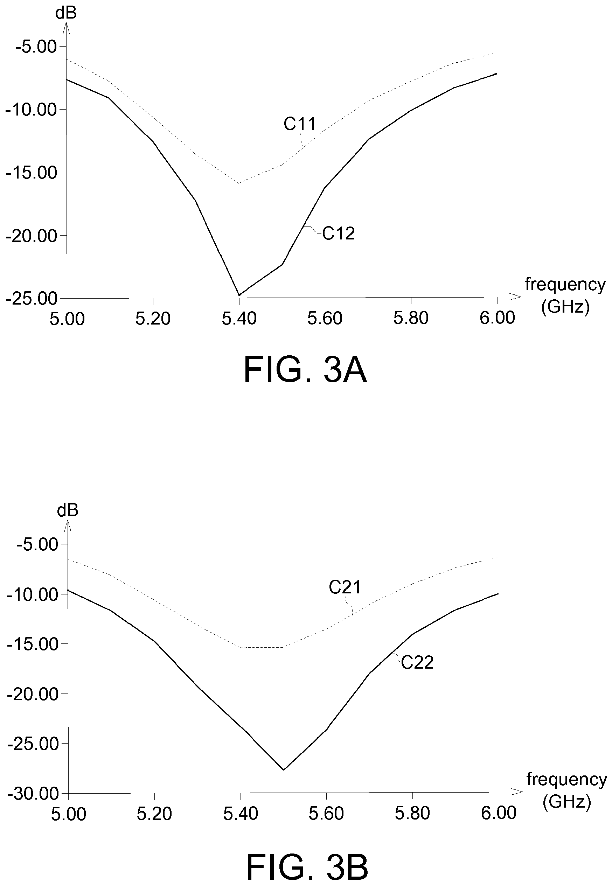

Referring to FIGS. 3A and 3B, return loss characteristic diagrams of a conventional wireless communication module and the wireless communication module 100 of FIG. 1 are shown. In FIG. 3A, curve C11 denotes a return loss characteristic curve of the first antenna of a conventional wireless communication module not having a resonator group 140; curve C12 denotes a return loss characteristic curve of the first antenna 120 of FIG. 1. In FIG. 3B, curve C21 denotes a return loss characteristic curve of the second antenna of a conventional wireless communication module not having a resonator group 140; curve C22 denotes a return loss characteristic curve of the second antenna 130 of FIG. 1. A comparison between curves C11, C12, C21 and C22 shows that the return loss of the first antenna 120 and the return loss of the second antenna 130 of the wireless communication module 100 having the resonator group 140 both drop significantly within a frequency band of 5.15 GHz∼ 5.85 GHz (the lower the return loss, the larger the signal strength).

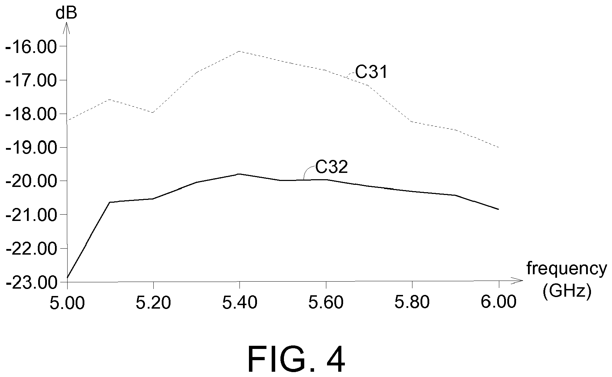

Referring to FIG. 4, an isolation diagram of a conventional wireless communication module and the wireless communication module 100 of FIG. 1 is shown. In FIG. 4, curve C31 denotes an isolation characteristic curve of a conventional wireless communication module not having a resonator group 140; curve C32 denotes an isolation characteristic curve of the wireless communication module 100 of FIG. 1. A comparison between curves C31 and C32 shows that the isolation of the wireless communication module 100 having a resonator group 140 drops significantly when the wireless signal is within a frequency band of 5.15 GHz∼5.85 GHz (the lower the isolation, the better the performance of isolation).

As indicated in Table 1, group A1 denotes a radiation efficiency of the first antenna 120 of the wireless communication module 100 of FIG. 1; group A2 denotes a radiation efficiency of the second antenna 130 of the wireless communication module 100 of FIG. 1; group B1 denotes a radiation efficiency of the first antenna of a conventional wireless communication module; group B2 denotes a radiation efficiency of the second antenna of a conventional wireless communication module. Table 1 shows that when the wireless signal is within a frequency band of 5.1 GHz∼ 5.9 GHz, the radiation efficiency of the wireless communication module 100 of the embodiments of the present invention is larger than 71, and is larger than that of a conventional wireless communication module.

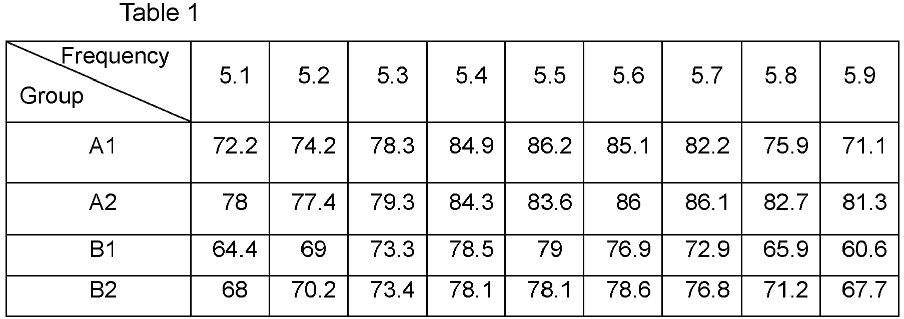

While the invention has been described by way of example and in terms of the preferred embodiment (s), it is to be understood that the invention is defined by the appended claims.

## Claims

1. A wireless communication module (100, 200), comprising:
a substrate (110), having a lateral surface (110s);
a first antenna (120), adjacent to the lateral surface (110s) of the substrate (110);
a second antenna (130), adjacent to the lateral surface (110s) of the substrate (110), wherein a connection direction between the first antenna (120) and the second antenna (130) is parallel to the lateral surface (110s);
wherein the wireless communication module (100, 200) is **characterized in that**:
a resonator group (140, 150), disposed between the first antenna (120) and the second antenna (130) and separated from the first antenna (120) and the second antenna (130) along a direction parallel to the lateral surface (110s), wherein the resonator group (140, 150) comprises:
a first resonator (141), adjacent to the lateral surface (110s) and comprising a first resonant cavity (141c1), a first extension slot (141r1), a first conductive portion (1411) and a second conductive portion (1412), wherein the first extension slot (141r1) extends towards the lateral surface (110s) of the substrate (110) from the first resonant cavity (141c1) and forms an opening (110a1) exposed from the lateral surface (110s), and the first conductive portion (1411) and the second conductive portion (1412) are located within the first resonant cavity (141c1) and separated from each other; and
a second resonator (142), separated from the first resonator (141) along a direction perpendicular to the lateral surface (110s) and comprising a second resonant cavity (142c1) and a second extension slot (142r), wherein the second extension slot (142r) extends towards the lateral surface (110s) of the substrate (110) from the second resonant cavity (142c1) and is separated from the first resonant cavity (141c1) of the first resonator (141), and the first resonator (141) is disposed between the lateral surface (110s) and the second resonator (142);
wherein the first antenna (120), the second antenna (130), the first resonator (141) and the second resonator (142) are coplanar.

2. The wireless communication module (100, 200) according to claim 1, wherein a groove (141r2) is formed between the first conductive portion (1411) and the second conductive portion (1412), and the groove (141r2) is substantially collinear with the first extension slot (141r1).

3. The wireless communication module (100, 200) according to claim 1, further comprising a plurality of the resonator groups (140, 150) disposed between the first antenna (120) and the second antenna (130) and separated from each other.

4. The wireless communication module (100, 200) according to claim 3, wherein the resonator groups (140, 150) are arranged in a direction substantially parallel to the connection direction or arranged in a direction substantially perpendicular to the connection direction.

5. The wireless communication module (100, 200) according to claim 3, wherein n resonator groups (140, 150) are arranged in a direction substantially parallel to the connection direction, and m resonator groups (140, 150) are arranged in a direction substantially perpendicular to the connection direction, such that the resonator groups (140, 150) are arranged as an n m matrix.

6. The wireless communication module (100, 200) according to claim 1, wherein the first resonator (141) further comprises:
a first extension cavity (141c2), extending towards the lateral surface (110s) of the substrate (110) from a side of the first resonant cavity (141c1); and
a second extension cavity (141c3), extending towards the lateral surface (110s) of the substrate (110) from the side of the first resonant cavity (141c1);
wherein the first extension cavity (141c2) and the second extension cavity (141c3) respectively are located on two opposite sides of the first extension slot (141r1) and separated from the first extension slot (141r1).

7. The wireless communication module (100, 200) according to claim 1, wherein the second resonator (142) further comprises:
a third extension cavity (142c2), extending towards the lateral surface (110s) of the substrate (110) from a side of the second resonant cavity (142c1); and
a fourth extension cavity (142c3), extending towards the lateral surface (110s) of the substrate (110) from the side of the second resonant cavity (142c1), wherein the third extension cavity (142c2) and the fourth extension cavity (142c3) respectively are located on two opposite sides of the second extension slot (142r) and separated from the second extension slot (142r).

8. The wireless communication module according to claim 1, wherein the wireless communication module comprises a plurality of the resonator groups (140, 150) comprising a first resonator group (140) and a second resonator group (150), the first resonator group (140) comprises the first resonator (141) and the second resonator (142), and the second resonator group (150) is disposed between the first resonator group (140) and the second antenna (130) and comprises:
a third resonator (151), adjacent to the lateral surface (110s) and comprising a third resonant cavity (151c1, 241c1), a third extension slot (151r1, 241r1), a third conductive portion (1511, 2411) and a fourth conductive portion (1511, 2411), wherein the third extension slot (151r1, 241r1) extends towards the lateral surface (110s) of the substrate (110) from the third resonant cavity (151c1, 241c1) and forms another opening (110a2) on the lateral surface (110s), and the third conductive portion (1511, 2411) and the fourth conductive portion (1512, 2412) are located within the third resonant cavity (151c1, 241c1) and separated from each other; and
a fourth resonator (152), separated from the third resonator (151) along a direction perpendicular to the lateral surface (110s) and comprising a fourth resonant cavity (152c1, 242c1) and a fourth extension slot (152r, 242r), wherein the fourth extension slot (152r, 242r) extends towards the lateral surface (110s) of the substrate (110) from the fourth resonant cavity (152c1, 242c1) and is separated from the third resonant cavity (151c1, 241c1) of the third resonator (151), wherein the third resonator (151) is disposed between the lateral surface (110s) and the fourth resonator (152).

9. The wireless communication module according to claim 8, wherein the first resonator (141) and the third resonator (151) have the same shape, and the second resonator (142) and the fourth resonator (152) have the same shape.

10. The wireless communication module according to claim 1, wherein the wireless communication module comprises a plurality of the resonator groups (140, 240) comprising a first resonator group (140) and a second resonator group (240), the first resonator group (140) comprises the first resonator (141) and the second resonator (142), and the second resonator group (240) comprises:
a third resonator (241), adjacent to the first resonator group (140) and comprising a third resonant cavity (241c1), a third extension slot (241r1), a third conductive portion (2411) and a fourth conductive portion (2412), wherein the third extension slot (241r1) extends towards the lateral surface (110s) of the substrate (110) from the third resonant cavity (241c1) and is separated from the second resonant cavity (142c1) of the second resonator (142), and the third conductive portion (2411) and the fourth conductive portion (2412) are located within the third resonant cavity (241c1) and separated from each other;
a fourth resonator (242), separated from the third resonator (241) along a direction perpendicular to the lateral surface (110s) and comprising a fourth resonant cavity (242c1) and a fourth extension slot (242r); wherein the fourth extension slot (242r) extends towards the lateral surface (110s) of the substrate (110) from the fourth resonant cavity (242c1) and is separated from the third resonant cavity (241c1) of the third resonator, wherein the third resonator (241) is disposed between the lateral surface (110s) and the fourth resonator (242).

11. The wireless communication module according to claim 10, wherein the first resonator (141) and the third resonator (241) have the same shape, and the second resonator (142) and the fourth resonator (242) have the same shape.

12. The wireless communication module according to claim 10, further comprising:
an expansion slot (260), located between the first resonator group (140) and the second resonator group (240) along a direction perpendicular to the lateral surface (110s) and separated from the first resonator group (140);
wherein the third extension slot (241r1) of the second resonator group (240) extends to the expansion slot to form another opening (240a1).

13. The wireless communication module according to claim 12, wherein the expansion slot (260) extends along a direction parallel to the lateral surface (110s).

## Patentansprüche

1. Drahtloskommunikationsmodul (100, 200) mit:
einem Substrat (110) mit einer Seitenfläche (110s);
einer ersten Antenne (120) nahe der Seitenfläche (110a) des Substrats (110) ;
einer zweiten Antenne (130) nahe der Seitenfläche (110s) des Substrats (110), wobei eine Verbindungsrichtung zwischen der ersten Antenne (120) und der zweiten Antenne (130) parallel zu der Seitenfläche (110s) verläuft;
wobei das Drahtloskommunikationsmodul (100, 200) **dadurch gekennzeichnet ist, dass**:
eine Resonatorgruppe (140, 150), welche zwischen der ersten Antenne (120) und der zweiten Antenne (130) angeordnet ist und von der ersten Antenne (120) und der zweiten Antenne (130) entlang einer zu der Seitenfläche (110s) parallel verlaufenden Richtung getrennt ist, wobei die Resonatorgruppe (140, 150) aufweist:
einen ersten Resonator (141), welcher der Seitenfläche (110s) benachbart ist und einen ersten Resonanzhohlraum (141c1), einen ersten **Erweiterungsschlitz** (141r1), einen ersten leitfähigen Bereich (1411) und einen zweiten leitfähigen Bereich (1412) aufweist, wobei sich der erste Erweiterungsschlitz (141r1) von dem ersten Resonanzhohlraum (141c1) in Richtung der Seitenfläche (110s) des Substrats (110) erstreckt und eine aus der Seitenfläche (110s) ausgenommene Öffnung (110a1) bildet, und wobei der erste leitfähige Bereich (1411) und der zweite leitfähige Bereich (1412) sich innerhalb des ersten Resonanzhohlraums (141c1) befinden und voneinander getrennt sind; und
einen zweiten Resonator (142), der von dem ersten Resonator (141) entlang einer senkrecht zu der Seitenfläche (110s) verlaufenden Richtung getrennt ist und einen zweiten Resonanzhohlraum (142c1) und einen zweiten Erweiterungsschlitz (142r) aufweist, wobei sich der zweite Erweiterungsschlitz (142r) von dem zweiten Resonanzhohlraum (142c1) in Richtung der Seitenfläche (110s) des Substrats (110) erstreckt und von dem ersten Resonanzhohlraum (141c1) des ersten Resonators (141) getrennt ist, und wobei der erste Resonator (141) zwischen der Seitenfläche (110s) und dem zweiten Resonator (142) angeordnet ist;
wobei die erste Antenne (120), die zweite Antenne (130), der erste Resonator (141) und der zweite Resonator (142 komplanar sind.

2. Drahtloskommunikationsmodul (100, 200) nach Anspruch 1, bei welchem eine Nut (1412) zwischen dem ersten leitfähigen Bereich (1411) und dem zweiten leitfähigen Bereich (1412) ausgebildet ist und die Nut (141r2) im Wesentlichen kollinear mit dem ersten Erweiterungsschlitz (141r1) ist.

3. Drahtloskommunikationsmodul (100, 200) nach Anspruch 1, ferner mit mehreren der Resonatorgruppen (140, 150), die zwischen der ersten Antenne (120) und der zweiten Antenne (130) angeordnet und voneinander getrennt sind.

4. Drahtloskommunikationsmodul (100, 200) nach Anspruch 3, bei welchem die Resonatorgruppen (140, 150) in einer Richtung angeordnet sind, die im Wesentlichen parallel zu der Verbindungsrichtung oder in einer Richtung angeordnet ist, die im Wesentlichen senkrecht zu der Verbindungsrichtung verläuft.

5. Drahtloskommunikationsmodul (100, 200) nach Anspruch 3, bei welchem n Resonatorgruppen (140, 150) in einer Richtung angeordnet sind, die im Wesentlichen parallel zu der Verbindungsrichtung verläuft, und m Resonatorgruppen (140, 150) in einer Richtung angeordnet sind, die im Wesentlichen senkrecht zu der Verbindungsrichtung verläuft, so dass die Resonatorgruppen (140, 150) als n m Matrix angeordnet sind.

6. Drahtloskommunikationsmodul (100, 200) nach Anspruch 1, bei welchem der erste Resonator (141) ferner aufweist:
einen ersten Erweiterungshohlraum (141c2), der sich von einer Seite des ersten Resonanzhohlraums (141c1) in Richtung der Seitenfläche (110s) des Substrats (110) erstreckt; und
einen zweiten Erweiterungshohlraum (141c3), der sich von der Seite des ersten Resonanzhohlraums (141c2) in Richtung der Seitenfläche (110s) des Substrats (110) erstreckt;
wobei der erste Erweiterungshohlraum (141c2) bzw. der zweite Erweiterungshohlraum (141c3) auf zwei gegenüberliegenden Seiten des ersten Erweiterungsschlitzes (141r1) angeordnet und von dem ersten Erweiterungsschlitz (141r1) getrennt sind.

7. Drahtloskommunikationsmodul (100, 200) nach Anspruch 1, bei welchem der zweite Resonator (142) ferner aufweist:
einen dritten Erweiterungshohlraum (142c2), der sich von einer Seite des zweiten Resonanzhohlraums (142c1) in Richtung der Seitenfläche (110s) des Substrats (100) erstreckt; und
einen vierten Erweiterungshohlraum (142c3), der sich von der Seite des zweiten Resonanzhohlraums (142c1) in Richtung der Seitenfläche (110s) des Substrats (110) erstreckt, wobei sich der dritte Erweiterungshohlraum (142c2) bzw. der vierte Erweiterungshohlraum (142c3) auf zwei gegenüberliegenden Seiten des zweiten Erweiterungsschlitzes (142r) befinden und von dem zweiten Erweiterungsschlitz (142r) getrennt sind.

8. Drahtloskommunikationsmodul (100, 200) nach Anspruch 1, bei welchem das Drahtloskommunikationsmodul mehrere der Resonatorgruppen (140, 150) aufweist, die eine erste Resonatorgruppe (140) und eine zweite Resonatorgruppe (150) aufweisen, wobei die erste Resonatorgruppe (140) den ersten Resonator (141) und den zweiten Resonator (142) aufweist, und die zweite Resonatorgruppe (150) zwischen der ersten Resonatorgruppe (142) und der zweiten Antenne (130) angeordnet ist und aufweist:
einen dritten Resonator (151) nahe der Seitenfläche (110s) und mit einem dritten Resonanzhohlraum (151c1, 241c1), einem dritten Erweiterungsschlitz (151r1, 241r1), einem dritten leitfähigen Bereich (1511, 2411) und einem vierten leitfähigen Bereich (1512, 2412), wobei sich der dritte Erweiterungsschlitz (151r1, 241r1) von dem dritten Resonanzhohlraum (151c1, 241c1) in Richtung der Seitenfläche (110s) des Substrats (110) erstreckt und eine weitere Öffnung (110a2) in der Seitenfläche (110a) bildet, und wobei der dritte leitfähige Bereich (1511, 2411) und der vierte leitfähige Bereich (1512, 2412) sich innerhalb des dritten Resonanzhohlraums (151c1, 241c1) befinden und voneinander getrennt sind; und
einen vierten Resonator (152), der vom dritten Resonator (141) entlang einer senkrecht zu der Seitenfläche (110s) verlaufenden Richtung getrennt ist und mit einem vierten Resonanzhohlraum (152c1, 242c1) und einem vierten Erweiterungsschlitz (152r, 242r) aufweist, wobei sich der vierte Erweiterungsschlitz (152r, 242r) von dem vierten Resonanzhohlraum (152c1, 242c1) in Richtung der Seitenfläche (110s) des Substrats (100) erstreckt und von dem dritten Resonanzhohlraum (151c1, 241c1) des dritten Resonators (151) getrennt ist, wobei der dritte Resonator (151) zwischen der Seitenfläche (110s) und dem vierten Resonator (152) angeordnet ist.

9. Drahtloskommunikationsmodul nach Anspruch 8, bei welchem der erste Resonator (141) und der dritte Resonator (151) die gleiche Form aufweisen und der zweite Resonator (142) und der vierte Resonator (152) die gleiche Form aufweisen.

10. Drahtloskommunikationsmodul nach Anspruch 1, bei welchem das Drahtloskommunikationsmodul mehrere der Resonatorgruppen (140, 240) aufweist, die eine erste Resonatorgruppe (140) und eine zweite Resonatorgruppe (240) aufweisen, wobei die erste Resonatorgruppe (140) den ersten Resonator (141) und den zweiten Resonator (142) aufweist, und die zweite Resonatorgruppe (240) aufweist:
einen dritten Resonator (241) nahe der ersten Resonatorgruppe (140) und mit einem dritten Resonanzhohlraum (241c1), einem dritten Erweiterungsschlitz (241r1), einem dritten leitfähigen Bereich (2411) und einem vierten leitfähigen Bereich (2412), wobei sich der dritte Erweiterungsschlitz (241r1) von dem dritten Resonanzhohlraum (241c1) in Richtung der Seitenfläche (110s) des Substrats (110) erstreckt und von dem zweiten Resonanzhohlraum (142c1) des zweiten Resonators (142) getrennt ist, und wobei der dritte leitfähige Bereich (2411) und der vierte leitfähige Bereich (2412) sich innerhalb des dritten Resonanzhohlraums (241c1) befinden und voneinander getrennt sind;
einen vierten Resonator (242), der von dem dritten Resonator (241) entlang einer zu der Seitenfläche (110s) senkrecht verlaufenden Richtung getrennt ist und einen vierten Resonanzhohlraum (242c1) und einen vierten Erweiterungsschlitz (242r) aufweist;
wobei sich der vierte Erweiterungsschlitz (242r) von dem vierten Resonanzhohlraum (242c1) In Richtung der Seitenfläche (110s) des Substrats (110) erstreckt und von dem dritten Resonanzhohlraum (241c1) des dritten Resonators (241) getrennt ist, wobei der dritte Resonator (241) zwischen der Seitenfläche (110s) und dem vierten Resonator (242) angeordnet ist.

11. Drahtloskommunikationsmodul nach Anspruch 10, bei welchem der erste Resonator (141) und der dritte Resonator (241) die gleiche Form aufweisen und der zweite Resonator (142) und der vierte Resonator (242) die gleiche Form aufweisen.

12. Drahtloskommunikationsmodul nach Anspruch 10, ferner mit:
einen Expansionsschlitz (260), der zwischen der ersten Resonatorgruppe (140) und der zweiten Resonatorgruppe (240) entlang einer senkrecht zu der Seitenfläche (110s) verlaufenden Richtung angeordnet und von der ersten Resonatorgruppe (140) getrennt ist;
wobei sich der dritte Erweiterungsschlitz (241r1) der zweiten Resonatorgruppe (240) zu dem Expansionsschlitz erstreckt, um eine weitere Öffnung (240a1) zu bilden.

13. Drahtloskommunikationsmodul nach Anspruch 12, bei welchem sich der Expansionsschlitz (260) entlang einer parallel zu der Seitenfläche (101s) verlaufenden Richtung erstreckt.

## Revendications

1. Module de communication sans fil (100, 200), comprenant :
un substrat (110), ayant une surface latérale (110s) ;
une première antenne (120), adjacente à la surface latérale (110s) du substrat (110) ;
une deuxième antenne (130), adjacente à la surface latérale (110s) du substrat (110) ; où une direction de connexion entre la première antenne (120) et la deuxième antenne (130) est parallèle à la surface latérale (110s) ;
dans lequel le module de communication sans fil (100, 200) est **caractérisé par** :
un groupe de résonateurs (140, 150), disposé entre la première antenne (120) et la deuxième antenne (130) et séparé de la première antenne (120) et de la deuxième antenne (130) le long d'une direction parallèle à la surface latérale (110s), où le groupe de résonateurs (140, 150) comprend :
un premier résonateur (141), adjacent à la surface latérale (110s) et comprenant une première cavité résonnante (141c1), une première fente d'extension (141r1), une première partie conductrice (1411) et une deuxième partie conductrice (1412), où la première fente d'extension (141r1) s'étend vers la surface latérale (110s) du substrat (110) à partir de la première cavité résonnante (141c1) et forme une ouverture (110a1) exposée depuis la surface latérale (110s), et la première partie conductrice (1411) et la deuxième partie conductrice (1412) sont situées à l'intérieur de la première cavité résonnante (141c1) et séparées l'une de l'autre ; et
un deuxième résonateur (142), séparé du premier résonateur (141) le long d'une direction perpendiculaire à la surface latérale (110s) et comprenant une deuxième cavité résonnante (142c1) et une deuxième fente d'extension (142r), où la deuxième fente d'extension (142r) s'étend vers la surface latérale (110s) du substrat (110) à partir de la deuxième cavité résonnante (142c1) et est séparée de la première cavité résonnante (141c1) du premier résonateur (141), et le premier résonateur (141) est disposé entre la surface latérale (110s) et le deuxième résonateur (142) ;
dans lequel la première antenne (120), la deuxième antenne (130), le premier résonateur (141) et le deuxième résonateur (142) sont coplanaires.

2. Module de communication sans fil (100, 200) selon la revendication 1, dans lequel une rainure (141r2) est formée entre la première partie conductrice (1411) et la deuxième partie conductrice (1412), et la rainure (141r2) est essentiellement colinéaire avec la première fente d'extension (141r1).

3. Module de communication sans fil (100, 200) selon la revendication 1, comprenant en outre une pluralité de groupes de résonateurs (140, 150) disposés entre la première antenne (120) et la deuxième antenne (130) et séparés les uns des autres.

4. Module de communication sans fil (100, 200) selon la revendication 3, dans lequel les groupes de résonateurs (140, 150) sont agencés dans une direction essentiellement parallèle à la direction de connexion ou agencés dans une direction essentiellement perpendiculaire à la direction de connexion.

5. Module de communication sans fil (100, 200) selon la revendication 3, dans lequel n groupes de résonateurs (140, 150) sont agencés dans une direction essentiellement parallèle à la direction de connexion, et m groupes de résonateurs (140, 150) sont agencés dans une direction essentiellement perpendiculaire à la direction de connexion, de sorte que les groupes de résonateurs (140, 150) soient agencés sous forme d'une matrice n m.

6. Module de communication sans fil (100, 200) selon la revendication 1, dans lequel le premier résonateur (141) comprend en outre
une première cavité d'extension (141c2), s'étendant vers la surface latérale (110s) du substrat (110) à partir d'un côté de la première cavité résonnante (141c1) ; et
une deuxième cavité d'extension (141c3), s'étendant vers la surface latérale (110s) du substrat (110) à partir du côté de la première cavité résonnante (141c1) ;
dans lequel la première cavité d'extension (141c2) et la deuxième cavité d'extension (141c3) sont respectivement situées sur deux côtés opposés de la première fente d'extension (141r1) et séparées de la première fente d'extension (141r1).

7. Module de communication sans fil (100, 200) selon la revendication 1, dans lequel le deuxième résonateur (142) comprend en outre :
une troisième cavité d'extension (142c2), s'étendant vers la surface latérale (110s) du substrat (110) à partir d'un côté de la deuxième cavité résonnante (142c1) ; et
une quatrième cavité d'extension (142c3), s'étendant vers la surface latérale (110s) du substrat (110) à partir du côté de la deuxième cavité résonnante (142c1), où la troisième cavité d'extension (142c2) et la quatrième cavité d'extension (142c3) sont respectivement situées sur deux côtés opposés de la deuxième fente d'extension (142r) et séparées de la deuxième fente d'extension (142r).

8. Module de communication sans fil selon la revendication 1, dans lequel le module de communication sans fil comprend une pluralité de groupes de résonateurs (140, 150) comprenant un premier groupe de résonateurs (140) et un deuxième groupe de résonateurs (150), le premier groupe de résonateurs (140) comprend le premier résonateur (141) et le deuxième résonateur (142), et le deuxième groupe de résonateurs (150) est disposé entre le premier groupe de résonateurs (140) et la deuxième antenne (130) et comprend :
un troisième résonateur (151), adjacent à la surface latérale (110s) et comprenant une troisième cavité résonnante (151c1, 241c1), une troisième fente d'extension (151r1, 241r1), une troisième partie conductrice (1511, 2411) et une quatrième partie conductrice (1511, 2411), où la troisième fente d'extension (151r1, 241r1) s'étend vers la surface latérale (110s) du substrat (110) depuis la troisième cavité résonnante (151c1, 241c1) et forme une autre ouverture (110a2) sur la surface latérale (110s), et la troisième partie conductrice (1511, 2411) et la quatrième partie conductrice (1512, 2412) sont situées à l'intérieur de la troisième cavité résonnante (151c1, 241c1) et séparées l'une de l'autre ; et
un quatrième résonateur (152), séparé du troisième résonateur (151) le long d'une direction perpendiculaire à la surface latérale (110s) et comprenant une quatrième cavité résonnante (152c1, 242c1) et une quatrième fente d'extension (152r, 242r), où la quatrième fente d'extension (152r, 242r) s'étend vers la surface latérale (110s) du substrat (110) depuis la quatrième cavité résonnante (152c1, 242c1) et est séparée de la troisième cavité résonnante (151c1, 241c1) du troisième résonateur (151), où le troisième résonateur (151) est disposé entre la surface latérale (110s) et le quatrième résonateur (152).

9. Module de communication sans fil selon la revendication 8, dans lequel le premier résonateur (141) et le troisième résonateur (151) ont la même forme, et le deuxième résonateur (142) et le quatrième résonateur (152) ont la même forme.

10. Module de communication sans fil selon la revendication 1, dans lequel le module de communication sans fil comprend une pluralité de groupes de résonateurs (140, 240) comprenant un premier groupe de résonateurs (140) et un deuxième groupe de résonateurs (240), le premier groupe de résonateurs (140) comprend le premier résonateur (141) et le deuxième résonateur (142), et le deuxième groupe de résonateurs (240) comprend :
un troisième résonateur (241), adjacent au premier groupe de résonateurs (140) et comprenant une troisième cavité résonnante (241c1), une troisième fente d'extension (241r1), une troisième partie conductrice (2411) et une quatrième partie conductrice (2412), dans lequel la troisième fente d'extension (241r1) s'étend vers la surface latérale (110s) du substrat (110) à partir de la troisième cavité résonnante (241c1) et est séparée de la deuxième cavité résonnante (142c1) du deuxième résonateur (142), et la troisième partie conductrice (2411) et la quatrième partie conductrice (2412) sont situées à l'intérieur de la troisième cavité résonnante (241c1) et séparées l'une de l'autre ;
un quatrième résonateur (242), séparé du troisième résonateur (241) le long d'une direction perpendiculaire à la surface latérale (110s) et comprenant une quatrième cavité résonnante (242c1) et une quatrième fente d'extension (242r) ; dans lequel la quatrième fente d'extension (242r) s'étend vers la surface latérale (110s) du substrat (110) à partir de la quatrième cavité résonnante (242c1) et est séparée de la troisième cavité résonnante (241c1) du troisième résonateur, où le troisième résonateur (241) est disposé entre la surface latérale (110s) et le quatrième résonateur (242).

11. Module de communication sans fil selon la revendication 10, dans lequel le premier résonateur (141) et le troisième résonateur (241) ont la même forme,
et le deuxième résonateur (142) et le quatrième résonateur (242) ont la même forme.

12. Module de communication sans fil selon la revendication 10, comprenant en outre :
un connecteur d'extension (260), situé entre le premier groupe de résonateurs (140) et le deuxième groupe de résonateurs (240) le long d'une direction perpendiculaire à la surface latérale (110s) et séparé du premier groupe de résonateurs (140) ;
dans lequel la troisième fente d'extension (241r1) du deuxième groupe de résonateurs (240) s'étend jusqu'au connecteur d'extension pour former une autre ouverture (240a1).

13. Module de communication sans fil selon la revendication 12, dans lequel le connecteur d'extension (260) s'étend le long d'une direction parallèle à la surface latérale (110s).
